# FASCICULE DE BREVET EUROPEEN

(11) **EP 2 813 904 B1**
(45) Date de publication et mention de la délivrance du brevet: **25.03.2020**
(21) Numéro de dépôt: 13171268.9
(22) Date de dépôt: 10.06.2013
(51) Int. Cl.: G04B 33/06, G04C 3/00, H02K 1/14, H02K 16/00, H02K 21/14

(54) **Mouvement électronique comprenant un moteur horloger**
Elektronisches Uhrwerk, das einen Uhrenmotor umfasst
Electronic movement comprising a clock motor

(43) Date de publication de la demande: 17.12.2014
(73) Titulaire: ETA SA Manufacture Horlogère Suisse, 2540 Grenchen (CH)
(72) Inventeur: Lagorgette, Pascal, 2502 Bienne (CH); Balmer, Raphaël, 2830 Courrendlin (CH); Maridor, Joël, 2000 Neuchâtel (CH)
(74) Mandataire: Surmely, Gérard

(56) Documents cités:
- EP-A1- 0 847 130
- EP-A1- 0 848 480
- EP-A1- 1 544 693
- FR-A1- 2 532 444

## Description

### Domaine technique

La présente invention concerne le domaine des mouvements électroniques horlogers qui comprennent un moteur horloger.

### Arrière-plan technologique

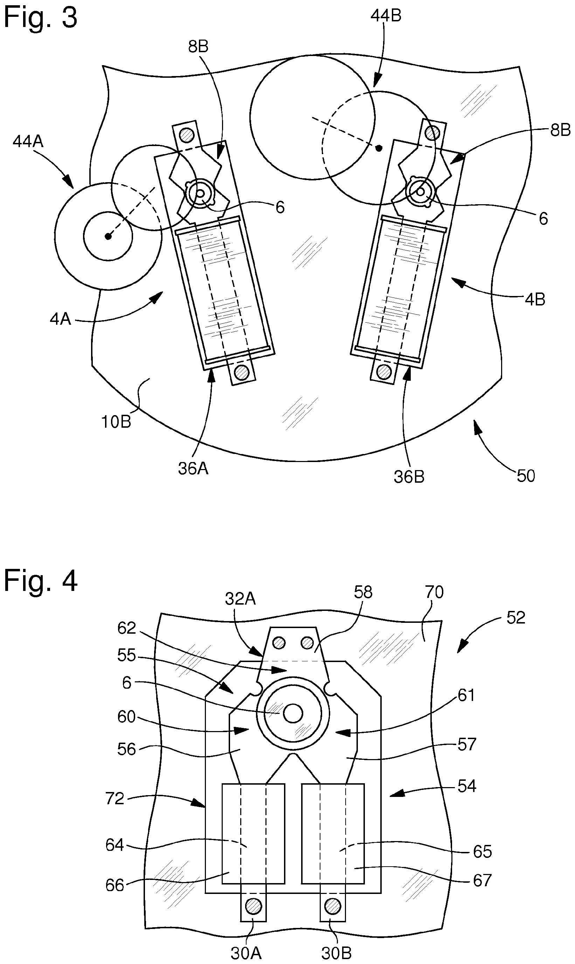

Il est connu notamment des documents EP 0847130 et EP 0 848 480 un moteur monophasé dont le stator est directement formé dans une plaque de base ou une platine en matériau magnétique (figure 4 en particulier), un trou pour l'aimant permanent du rotor étant prévu dans cette plaque de base ou platine. Les deux pôles du stator sont formés par un usinage d'une ouverture dans la plaque de base ou platine, cet usinage étant prévu de manière à former deux isthmes continus en périphérie du trou pour le rotor. Un tel agencement est avantageux pour permettre de positionner le moteur n'importe où au sein de la plaque de base ou platine, et pour permettre d'agencer plusieurs moteurs dans une même plaque de base ou platine. De plus, de préférence, des éléments d'un mouvement horloger comprenant la plaque de base ou platine sont montés sur cette dernière. Par exemple, des paliers d'un train d'engrenages couplé au moteur sont agencés dans la plaque de base ou platine.

Le mouvement horloger susmentionné pose cependant un inconvénient important. L'usinage des isthmes séparant les deux pôles statoriques en périphérie du trou pour le rotor est difficilement possible avec les techniques classiques d'usinage de platines ou de ponts d'un mouvement horloger. Les isthmes doivent être minces pour assurer la saturation magnétique entre les deux pôles statoriques. Il faut donc usiner avec une faible tolérance des isthmes présentant une très petite largeur (dans leur partie centrale). Dans un moteur horloger classique, de tels isthmes sont obtenus par étampage. Or l'étampage d'isthmes dans une platine n'est pas sans poser de problèmes et augmente le coût de production de telles platines. Ensuite, la platine présente des parties, formées par les pôles internes situés à l'intérieur des ouvertures, qui sont fragiles et peuvent facilement être pliées, voire cassées. Or une platine doit généralement subir plusieurs usinages et traitements ; ce qui engendre diverses manipulations au cours desquelles les pôles internes risquent d'être endommagés. On remarquera qu'un problème d'usinage des isthmes ou un pôle interne endommagé lors d'une manipulation a pour conséquence de rendre la platine non utilisable. Or une platine coûte cher. Ainsi, même pour un rendement industriel avec un taux moyen, la perte financière est élevée.

### Résumé de l'invention

La présente invention a pour but de palier les inconvénients de l'art antérieur susmentionné.

A cet effet, la présente invention a pour objet un mouvement horloger électronique équipé d'au moins un moteur comprenant un stator et un rotor à aimant permanent situé dans un trou du stator, ce stator définissant au moins deux pôles magnétiques comprenant respectivement au moins deux épanouissements polaires s'étendant à la périphérie du trou. Les épanouissements polaires sont reliés entre eux par au moins un isthme continu. Le moteur comprend en outre au moins une bobine montée respectivement autour d'au moins un noyau. Les épanouissements polaires et le noyau forment ensemble une première partie en matériau ferromagnétique, cette première partie étant constituée par ou comprenant une plaquette monolithique formant conjointement les épanouissements polaires et le noyau. Une partie d'extrémité de chaque noyau de bobine est reliée à au moins un épanouissement polaire correspondant par une deuxième partie, définissant une plaque de base ou une platine en matériau magnétique, à laquelle la première partie est fixée et sur laquelle sont montés au moins partiellement des éléments du mouvement horloger électronique.

D'autres caractéristiques particulières de l'invention seront exposées ci-après dans la description détaillée de l'invention.

### Brève description des dessins

L'invention sera décrite ci-après à l'aide de dessins annexés, donnés à titre d'exemples nullement limitatifs, dans lesquels :
- La Figure 1 est une vue en plan, partielle et schématique, d'un premier mode de réalisation d'un mouvement horloger selon l'invention;
- La Figure 2 est une vue en plan, partielle et schématique, d'un deuxième mode de réalisation d'un mouvement horloger selon l'invention;
- La Figure 3 est une vue schématique en plan d'une variante du premier mode de réalisation où le mouvement horloger comprend au moins deux moteurs monophasés; et
- La Figure 4 est une vue en plan, partielle et schématique, d'un troisième mode de réalisation d'un mouvement horloger selon l'invention.

### Description détaillée de l'invention

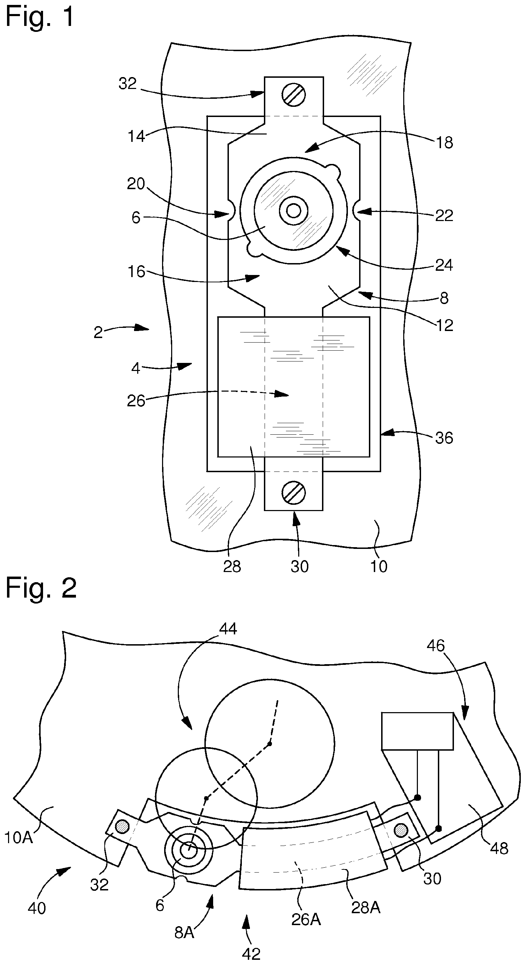

La Figure 2 montre en partie un mouvement horloger électronique 2 équipé d'un moteur monophasé 4. Ce moteur monophasé comprend un stator et un rotor 6. Le stator est formé par une première partie 8 en matériau magnétique et par une plaque de base ou platine 10 à laquelle la première partie est reliée fixement. Le stator comprend deux pôles 12 et 14 comprenant respectivement deux épanouissements polaires 16 et 18 qui définissent un trou 24 pour le rotor. Ces deux épanouissements polaires s'étendent à la périphérie du trou 24 et sont reliés l'un à l'autre par des isthmes continus 20 et 22. Selon l'invention, la première partie 8 du stator comprend les deux épanouissements polaires et un noyau 26 en matériau ferromagnétique autour duquel est montée une bobine 28. Une première extrémité du noyau 26 est reliée au pôle statorique 12 alors que la seconde extrémité est reliée au pôle statorique 14. Plus précisément, la partie 30 de la seconde extrémité du noyau est fixée à la plaque de base ou platine 10 par une vis ou un autre moyen de fixation alors que la première extrémité est matériellement prolongée par le pôle statorique 12, ce dernier pôle étant constitué substantiellement par l'épanouissement polaire 16. Le deuxième pôle 14 est formé de deux parties distinctes que sont, d'une part, l'épanouissement 18 prolongé par une deuxième partie d'extrémité 32 de la première partie 8 et, d'autre part, la plaque de base ou platine 10. Ainsi, la partie d'extrémité 30 du noyau 26 est reliée magnétiquement à l'épanouissement 18 du pôle statorique correspondant par la plaque de base ou platine.

Par pôle statorique, on comprend une partie du stator, hors du/des noyau(x) de bobine, qui conduit un champ magnétique engendré par une quelconque des bobines d'une extrémité du noyau portant cette bobine à un épanouissement polaire qui s'étend sur un secteur angulaire à la périphérie du trou pour l'aimant permanent du rotor. Un pôle statorique est donc associé ici à un seul épanouissement polaire. Le champ magnétique peut être entrant ou sortant relativement audit trou selon la polarité du courant d'alimentation de la bobine. On notera que dans le cadre de l'exposé de la présente invention, le ou les noyau(x) de bobine ne sont pas considérés comme un/des élément(s) distinct(s) relativement au stator, mais comme partie(s) de ce stator.

Dans le premier mode de réalisation de la Figure 1, la plaque de base ou platine 10 présente une ouverture 36 dans laquelle la bobine 28 est partiellement située et la première partie 8 du stator traverse cette ouverture en projection dans un plan général dans lequel s'étend la plaque de base ou platine. On remarquera que le noyau 26 et les deux épanouissements polaires 16 et 18 du moteur monophasé sont sensiblement alignés et définissent une structure plane parallèle audit plan général, cette structure plane s'étendant, dans la variante représentée à la Figure 1, au-dessus de l'ouverture 36. La première partie est donc superposée à cette ouverture.

Selon l'invention, la première partie 8 du stator est constituée par ou comprend une plaquette monolithique formant conjointement les deux épanouissements polaires et le noyau. Dans une variante de réalisation, la première partie 8 est feuilletée ; elle comprend alors un empilement de plaquettes dont au moins une plaquette est monolithique, cette dernière plaquette définissant un trou pour le rotor avec un bord fermé. On remarquera que l'ouverture 36 dans la plaque de base ou platine 10 est de forme simple, par exemple rectangulaire. Aucune zone de cette plaque de base ou platine n'est rendue fragile par l'incorporation du moteur dans le mouvement horloger en utilisant la plaque de base ou platine pour former partiellement un pôle statorique. En effet, les isthmes 20 et 22 sont agencés dans la première partie 8 du stator, cette première partie étant fixée à la plaque de base ou platine lors de l'assemblage du mouvement horloger. Ainsi, la plaque de base ou platine est fabriquée, au moins dans une étape préliminaire, séparément de la première partie 8. Cette première partie peut être obtenue de manière classique par étampage; ce qui permet de maîtriser aisément la formation des isthmes et également des alvéoles de positionnement à la périphérie du trou 24. L'usinage de l'ouverture 36 ne pose aucun problème et peut être réalisé facilement lors d'une fabrication usuelle d'une platine horlogère. De plus, les deux parties d'extrémité 30 et 32 de la première partie 8 peuvent être fixées sur des zones rigides de la plaque de base ou platine.

Dans la variante représentée aux Figures 1 et 2, la partie d'extrémité du noyau 26 présente une section avec des dimensions sensiblement égales à la section du trou longitudinal de la bobine 28 montée autour de ce noyau ; cette bobine étant préformée, sans support de bobine, et introduite autour du noyau lors de l'assemblage du moteur. On remarquera que les dimensions du noyau peuvent aussi être inférieures à la section du trou de bobine, cette dernière étant par exemple enroulée autour d'un support de bobine. On notera que, dans une autre variante, la bobine peut aisément être enroulée directement autour du noyau.

A la Figure 2 est représenté un deuxième mode de réalisation d'un mouvement horloger 40 selon l'invention. Il se distingue premièrement du premier mode de réalisation par le noyau 26A en arc de cercle sur lequel est montée une bobine 28A avec un axe central également en arc de cercle. La bobine peut, comme pour le premier mode de réalisation, être préformée ou enroulée directement sur le noyau. Ensuite, il se distingue par le positionnement de la première partie 8A du moteur monophasé 42 qui est agencée dans une échancrure en bordure de la platine 10A. Les diverses parties formant la première partie 8A du stator ne seront pas à nouveau décrites ici en détails. La platine 10A est en matériau magnétique et sert au retour du flux magnétique entre les deux parties d'extrémité 30 et 32 de la première partie 8A du moteur 42. On notera que, dans la variante représentée, les deux parties d'extrémité 30 et 32 sont soudées à la platine 10A, notamment au moyen d'un faisceau laser.

La platine 10A constitue la platine principale du mouvement horloger électronique 40. Le rotor 6 est couplé à un train d'engrenages 44 formés de plusieurs mobiles dont les axes tournent dans des paliers respectifs agencés dans la platine 10A. Cette platine porte en plus divers composants du circuit électronique 46, lequel comprend un circuit imprimé (PCB) 48 avec des pistes électriques et en particulier deux plages de contact auxquelles sont reliées électriquement les deux extrémités de la bobine 28A.

La Figure 3 montre une variante préférée du premier mode de réalisation. Le mouvement horloger 50 comprend une platine 10B en matériau magnétique présentant deux ouvertures 36A et 36B au-dessus desquelles sont respectivement agencées deux premières parties 8B de deux moteurs 4A et 4B de ce mouvement horloger. Chacune des deux premières parties 8B est semblable à la première partie 8 de la Figure 1 et ne sera pas décrite ici en détails. Les deux extrémités de chaque première partie est soudée à ses deux parties d'extrémité à la platine 10B. Cette platine 10B est commune aux deux moteurs et sert au montage de divers composants du mouvement horloger, notamment aux deux trains d'engrenages 44A et 44B qui engrènent respectivement aux deux rotors 6 des deux moteurs 4A et 4B. On remarquera qu'une autre variante peut avoir plus de deux moteurs selon l'invention associés à une même platine.

A la Figure 4 est représenté schématiquement un troisième mode de réalisation de l'invention dans lequel le mouvement horloger 52 comprend un moteur biphasé 54 avec trois pôles statoriques 56,57,58 qui définissent respectivement trois épanouissements polaires 60,61,62. Ces trois épanouissements polaires sont reliés entre eux par des isthmes continus. Comme dans le premier mode de réalisation, la platine ou plaque de base 70 en matériau magnétique présente une ouverture 72 au-dessus de laquelle est agencée la première partie 55 du moteur biphasé. Cette première partie comprend les trois épanouissements polaires, qui définissent le trou pour le rotor 6, et deux noyaux 64 et 65 qui prolongent respectivement les deux pôles 56 et 57. Cette première partie est en matériau ferromagnétique et est constituée par ou comprend au moins une plaquette monolithique formant conjointement les trois épanouissements polaires et les deux noyaux. Les deux noyaux portent respectivement deux bobines 66 et 67. La partie d'extrémité 30A, respectivement 30B de chacun des deux noyaux est soudée à la platine ou plaque de base 70. L'épanouissement polaire 62 est prolongé par une partie d'extrémité 32A également soudée à la platine ou plaque de base 70, laquelle forme partiellement le pôle statorique 58. Ainsi, une partie d'extrémité 30A, respectivement 30B de chaque noyau de bobine est reliée à un épanouissement polaire correspondant 62 par une deuxième partie 70, définissant une plaque de base ou une platine en matériau magnétique, à laquelle la première partie 55 est fixée.

## Revendications

1. Mouvement horloger électronique (2, 40, 50, 52) équipé d'au moins un moteur (4, 42, 4A, 4B) comprenant un stator et un rotor à aimant permanent (6) situé dans un trou (24) du stator, ce stator définissant au moins deux pôles magnétiques (12,14; 56,57,58) comprenant respectivement au moins deux épanouissements polaires (16,18 ; 60,61,62) s'étendant à la périphérie dudit trou, ces au moins deux épanouissements polaires étant reliés entre eux par au moins un isthme continu (20,22), le moteur comprenant au moins une bobine (28,28A,66,67) montée respectivement autour d'au moins un noyau (26,26A,64,65), **caractérisé en ce que** lesdits au moins deux épanouissements polaires et ledit au moins un noyau forment ensemble une première partie en matériau ferromagnétique (8,8A,8B,55), cette première partie étant constituée par ou comprenant une plaquette monolithique formant conjointement lesdits au moins deux épanouissements polaires et ledit au moins un noyau, et **en ce qu'**une partie d'extrémité (30, 30A,30B) de chaque noyau de bobine est reliée à au moins un épanouissement polaire correspondant par une deuxième partie (10,10A,10B,70), définissant une plaque de base ou une platine en matériau magnétique, à laquelle ladite première partie est fixée et sur laquelle sont montés au moins partiellement des éléments (44,46,44A,44B) dudit mouvement horloger électronique.

2. Mouvement horloger électronique selon la revendication 1, **caractérisé en ce que** ladite partie d'extrémité de chaque noyau présente une section avec des dimensions égales ou inférieures à la section du trou longitudinal de la bobine montée autour de ce noyau, cette bobine étant préformée avec ou sans support de bobine.

3. Mouvement horloger selon la revendication 1 ou 2, **caractérisé en ce que** ladite plaque de base ou platine présente une ouverture (36,36A,36B,72) dans laquelle ladite au moins une bobine est partiellement située, ladite première partie traversant cette ouverture dans une projection dans le plan général de ladite plaque de base ou platine.

4. Mouvement horloger électronique selon la revendications 1 ou 2, **caractérisé en ce que** le moteur est monophasé avec une seule bobine, et **en ce que** ladite première partie (8,8A,8B) définit une structure plane, le noyau de bobine et les deux épanouissements polaires étant sensiblement alignés.

5. Mouvement horloger électronique selon la revendication 3, **caractérisé en ce que** le moteur est monophasé avec une seule bobine, et **en ce que** ladite première partie (8,8B) définit une structure plane superposée à ladite ouverture, le noyau de bobine et les deux épanouissements polaires étant sensiblement alignés.

6. Mouvement horloger électronique selon la revendication 3 ou 5, **caractérisé en ce que** ladite plaque de base ou platine (10B) présente plusieurs ouvertures (36A,36B) dans lesquelles sont respectivement agencées plusieurs structures (8B) chacune semblables à ladite première partie, ces structures formant respectivement plusieurs moteurs (4A,4B), cette plaque de base ou platine étant commune à ces plusieurs moteurs.

## Patentansprüche

1. Elektronisches Uhrwerk (2, 40, 50, 52), ausgestattet mit mindestens einem Motor (4, 42, 4A, 4B), der einen Stator und einen in einem Loch (24) des Stators angeordneten Permanentmagnetrotor (6) umfasst, wobei dieser Stator mindestens zwei Magnetpole (12, 14; 56, 57, 58) definiert, die jeweils mindestens zwei Polschuhe (16, 18; 60, 61, 62) aufweisen, die sich am Umfang des Lochs erstrecken, wobei diese mindestens zwei Polschuhe über mindestens einen durchgehenden Isthmus (20, 22) miteinander verbunden sind, wobei der Motor mindestens eine um mindestens einen entsprechenden Kern (26, 26A, 64, 65) montierte Spule (28, 28A, 66, 67) umfasst, **dadurch gekennzeichnet, dass** die mindestens zwei Polschuhe und der mindestens eine Kern zusammen mindestens einen ersten Teil (8, 8A, 8B, 55) aus einem ferromagnetischen Material bilden, wobei dieser erste Teil durch eine kleine monolithische Platte gebildet ist oder eine solche umfasst, wobei sie gemeinsam die mindestens zwei Polschuhe und den mindestens einen Kern bilden, und dass ein Endabschnitt (30, 30A, 30B) jedes Spulenkerns mit mindestens einem entsprechenden Polschuh über einen zweiten Teil (10, 10A, 10B, 70) verbunden ist, der eine Grundplatte oder eine Platine aus magnetischem Material definiert, an der der erste Teil befestigt ist und auf der mindestens teilweise Elemente (44, 46, 44A, 44B) des elektronischen Uhrwerks montiert sind.

2. Elektronisches Uhrwerk nach Anspruch 1, **dadurch gekennzeichnet, dass** der Endabschnitt jedes Kerns einen Querschnitt mit Abmessungen aufweist, die gleich oder kleiner als jene des Querschnitts des Längslochs der um diesen Kern montierten Spule sind, wobei diese Spule mit oder ohne Spulenträger vorgeformt ist.

3. Uhrwerk nach Anspruch 1 oder 2, **dadurch gekennzeichnet, dass** die Grundplatte oder Platine eine Öffnung (36, 36A, 36B, 72) aufweist, in der sich die mindestens eine Spule teilweise befindet, wobei der erste Teil in einer Projektion auf die allgemeine Ebene der Grundplatte oder Platine durch diese Öffnung verläuft.

4. Elektronisches Uhrwerk nach Anspruch 1 oder 2, **dadurch gekennzeichnet, dass** der Motor einphasig mit einer einzelnen Spule ist und dass der erste Teil (8, 8A, 8B) eine ebene Struktur definiert, wobei der Spulenkern und die beiden Polschuhe im Wesentlichen aufeinander ausgerichtet sind.

5. Elektronisches Uhrwerk nach Anspruch 3, **dadurch gekennzeichnet, dass** der Motor einphasig mit einer einzelnen Spule ist und dass der erste Teil (8, 8B) eine ebene Struktur definiert, die der Öffnung überlagert ist, wobei der Spulenkern und die beiden Polschuhe im Wesentlichen aufeinander ausgerichtet sind.

6. Elektronisches Uhrwerk nach Anspruch 3 oder 5, **dadurch gekennzeichnet, dass** die Grundplatte oder Platine (10B) mehrere Öffnungen (36A, 36B) aufweist, in denen jeweils mehrere Strukturen (8B) angeordnet sind, die jeweils dem ersten Teil ähnlich sind, wobei diese Strukturen jeweils mehrere Motoren (4A, 4B) bilden, wobei diese Grundplatte oder Platine diesen mehreren Motoren gemeinsam ist.

## Claims

1. Electronic timepiece movement (2, 40, 50, 52) equipped with at least one motor (4, 42, 4A, 4B) including a stator and a permanent magnet rotor (6) located in a stator hole (24), said stator defining at least two magnetic poles (12, 14; 56, 57, 58) respectively including at least two pole shoes (16, 18; 60, 61, 62) extending at the periphery of said hole, said at least two pole shoes being connected to each other by at least one continuous isthmus (20, 22), the motor including at least one coil (28, 28A, 66, 67) respectively mounted around at least one core (26, 26A, 64, 65), **characterized in that** said at least two pole shoes and said at least one core form together a first part made of ferromagnetic material (8, 8A, 8B, 55), said first part being formed by or including at least one single-piece wafer forming both said at least two pole shoes and said at least one core, and **in that** an end portion (30, 30A, 30B) of each coil core is connected to at least one corresponding pole shoe by a second part (10, 10A, 10B, 70), defining a base plate or a main plate made of magnetic material, to which said first part is secured and on which elements (44, 46, 44A, 44B) of said electronic timepiece movement are at least partially mounted.

2. Electronic timepiece movement according to claim 1, **characterized in that** said end portion of each core has a section with dimensions that are equal to or smaller than the section of the longitudinal hole of the coil mounted around said core, said coil being preformed with or without a coil support.

3. Timepiece movement according to claim 1 or 2, **characterized in that** said base plate or main plate has an aperture (36, 36A, 36B, 72) in which said at least one coil is partially situated, said first part traversing said aperture in projection in the general plane of said base plate or main plate.

4. Electronic timepiece movement according to claims 1 or 2, **characterized in that** the motor is single-phase with a single coil, and **in that** said first part (8, 8A, 8B) defines a plane structure, the coil core and the two pole shoes being substantially aligned.

5. Electronic timepiece movement according to claim 3, **characterized in that** the motor is single-phase with a single coil, and **in that** said first part (8, 8B) defines a plane structure superposed on said aperture, the coil core and the two pole shoes being substantially aligned.

6. Electronic timepiece movement according to claim 3 or 5, **characterized in that** said base plate or main plate (10B) has several apertures (36A, 36B) in which several structures (8B) are respectively arranged, each similar to said first part, said structures respectively forming several motors (4A, 4B), said base plate or main plate being common to said several motors.
